# EUROPEAN PATENT SPECIFICATION

(11) **EP 2 887 620 B1**
(45) Date of publication and mention of the grant of the patent: **07.08.2019**
(21) Application number: 13306803.1
(22) Date of filing: 20.12.2013
(51) Int. Cl.: H04L 29/08, H04L 29/06

(54) **Session Initiation Protocol Messaging**
Sitzungsinitialisierungsprotokollnachrichtenübermittlung
Messagerie de protocole d'initiation de session

(43) Date of publication of application: 24.06.2015
(73) Proprietor: Alcatel Lucent, 91620 Nozay (FR)
(72) Inventor: Van Bemmel, Jeroen, Ottawa, Ontario K2K 2E6 (CA)
(74) Representative: Browne, Robin Forsythe

(56) References cited:
- US-A1- 2009 031 032
- HONGBO JIANG ET AL: "Load Balancing for SIP Server Clusters", INFOCOM 2009. THE 28TH CONFERENCE ON COMPUTER COMMUNICATIONS. IEEE, IEEE, PISCATAWAY, NJ, USA, 19 April 2009 (2009-04-19), pages 2286-2294, XP031468993, ISBN: 978-1-4244-3512-8

## Description

### FIELD OF THE INVENTION

The present invention relates to a network node, a method and a computer program product employing session initiation protocol messaging.

### BACKGROUND

Session initiation protocol (SIP) messaging is known. Such messaging is used for controlling communication sessions over internet protocol (IP) networks. SIP messages are sent between peers or network nodes and these messages govern the establishment and termination of a call between network nodes as set out in the Internet Engineering Task Force (IETF) Request for Comments (RFC) 3261.

US 2009/0031032 A1 discloses register clustering in a SIP-based network. Register and Invite requests may be routed between nodes within a cluster of SIP proxies to reach a single proxy within the cluster containing the registration information for that endpoint. An edge proxy can perform a hash table look-up to identify a particular node provisioned to service the client. Registration data may be backed up so that registration may be check-pointed by any different node in the cluster. A new node can talk to other nodes in a cluster one by one and offer to host. The new node can initially act as a back-up and, once the data is current, switch to being a primary. Although the session initiation protocol enables calls to be established between user clients, unexpected consequences can occur. Accordingly, it is desired to provide an improved technique for such messaging.

### SUMMARY

According to one embodiment, there is provided a method for a network node of a cluster of network nodes as claimed in claim 1.

One or more embodiments recognize that traditional architectures supporting SIP messaging assume a static configuration of functional elements, typically using weighted load balancing techniques to distribute requests across a number of servers, together with hardware redundancy and over-provisioning to deal with the possibility of failures. A SIP client is provisioned with a SIP: uniform resource identifier (URI) of a proxy, and uses Domain Name System (DNS) to resolve this URI to one or more servers (Session Border Controller (SBC) or Proxy Call Session Control Function (P-CSCF) in case of IP Multimedia Subsystem (IMS)). Requests are then forwarded between elements (e.g., SBC -> P-CSCF -> Serving Call Session Control Function (S-CSCF) -> originating Agent Server (AS) -> S-CSCF -> I-CSCF -> S-CSCF -> terminating AS -> S-CSCF -> P-CSCF -> SBC in a basic call), following standardized 3GPP procedures (see TS 24.229). Request processing capacity in IMS is typically over-dimensioned, leading to suboptimal resource usage. Adding capacity is a manual, tedious process that can typically only be done during a maintenance window by specialized engineers. The same is true for upgrading software to a next release.

Accordingly, a network node method is provided. The method may comprise the step of receiving a SIP REGISTER request from a user client. The SIP REGISTER request may contain registration state associated with that user client. The method may comprise the step of applying a hashing function to at least a portion of the SIP REGISTER request from the user client. The hashing function may determine a sub-cluster of network nodes. The sub-cluster of network nodes may comprise a plurality of network nodes from the cluster of network nodes. The method may also comprise the step of forwarding the SIP REGISTER request to each network node within the sub-cluster of network nodes so that the network nodes within the sub-cluster store the registration state for the user client. In this way, multiple network nodes store the registration state for each user client, which provides for flexibility since network nodes may be added or removed without affecting the establishment of calls since another network node will still contain the registration state of a user client. This enables individual network nodes to be added, removed or upgraded as required to improve available resources.

In one embodiment, the hashing function is identical to that of each network node within the cluster. Accordingly, the hashing function used by the network node may be a consistent hashing function which is the same hashing function used by all network nodes in the cluster. Alternatively, the hashing function may be a robust hashing function (in a similar manner to that used by the cache array routing protocol (CARP) as described by http://en.wikipedia.org/wiki/Cache_Array_Routing_Protocol or described in "A Simple Client-Based Hybrid Robust Hash Routing Web Caching System (2HRCS)", Jong Ho Park, Kil To Chong, Advanced Web Technologies and Applications, Lecture Notes in Computer Science Volume 3007, 2004, pp 467-472). This enables each network node to identify the same network nodes in the cluster for a given SIP REGISTER request.

In one embodiment, the hashing function identifies a ranked plurality of network nodes from the cluster of network nodes as the sub-cluster of network nodes. Accordingly, the hashing function may rank or assign a weighting to each identified network node within the sub-cluster of network nodes. This enables the subsequent requests to be distributed among the nodes within the sub- cluster typically based on the resources available to those network nodes.

In one embodiment, the at least a portion of the SIP REGISTER request comprises a TO HEADER of the SIP REGISTER request.

In one embodiment, the method comprises: receiving a SIP REGISTER request associated with another user client from a network node in the cluster; and storing registration of the another user client. Accordingly, as well as identifying other network nodes which are to store registration state, the network node may also be identified by other network nodes to store registration state for other user clients.

In one embodiment, the network node may be identified by the hashing function to be within the sub-cluster and so may also store the registration state.

In one embodiment, the method comprises: receiving a SIP INVITE request from an originating user client identifying a destination user client to be contacted; applying the hashing function to at least a portion of the SIP INVITE request to determine a sub-cluster of network nodes comprising a plurality of network nodes from the cluster of network nodes; and forwarding the SIP INVITE request to at least one of the plurality of network nodes of the sub-cluster of network nodes. Accordingly, the network node may identify one or more network nodes which store the registration state for the destination user client using the hashing function and forward the SIP INVITE request to one or more of these network nodes since they hold the information required to contact the destination user client.

In one embodiment, the at least a portion of the SIP INVITE request comprises a URI of the SIP INVITE request.

In one embodiment, the step of forwarding comprises: forwarding the SIP INVITE request to a first of the plurality of network nodes of the sub-cluster of network nodes. Hence, a preferred network node maybe identified based on a ranking or a weighting associated with that network node. This helps to match requests to resources available to those network nodes such that those with more resources receive more requests than those with fewer resources.

In one embodiment, the first of the plurality of network nodes of the sub-cluster of network nodes comprises a network node identified by the hashing function to be a highest ranking network node within the sub-cluster. Hence, a preferred network node maybe identified or a probability might be associated with the network nodes so that each receive requests in proportion to that probability in order to balance requests with available resources.

In one embodiment, the method comprises the step of: determining whether the first of the plurality of network nodes of the sub-cluster of network nodes responds to the SIP INVITE request and, if not, forwarding the SIP INVITE request to another of the plurality of network nodes of the sub-cluster of network nodes. Accordingly, should a network node not respond or fail, then another of the identified network nodes within the sub-cluster maybe provided with the SIP INVITE request.

In one embodiment, the second of the plurality of network nodes of the sub-cluster of network nodes comprises a network node identified by the hashing function to be a lower ranking network node within the sub-cluster.

In one embodiment, the method comprises the step of: adding a record-route to the SIP INVITE request prior to the step of forwarding.

In one embodiment, the method comprises the steps of: receiving a SIP INVITE request from another network node in the cluster of network nodes, SIP INVITE request the identifying a destination user client to be contacted; identifying the destination user client from stored registration state; and forwarding the SIP INVITE request to the destination user client identified by the stored registration state. Accordingly, as well as forwarding SIP INVITE requests to other network nodes, a network node may also receive such SIP INVITE requests from other network nodes associated with a user client for which that network node stores registration state.

In one embodiment, the method comprises the step of: adding a record-route to the SIP INVITE request prior to the step of forwarding.

In one embodiment, the method comprises the step of: storing an entry associated with the SIP INVITE request in a call data record.

In one embodiment, the method comprises the step of: reconciling call data records stored by network nodes to identify variation in entries of the call data records.

According to a second aspect, there is provided a network node for a cluster of network nodes as claimed in claim 14.

In one embodiment, the hashing function is identical to that of each network node within the cluster.

In one embodiment, the hashing function identifies a ranked plurality of network nodes from the cluster of network nodes as the sub-cluster of network nodes.

In one embodiment, the at least a portion of the SIP REGISTER request comprises a TO HEADER of the SIP REGISTER request.

In one embodiment, the reception logic is operable to receive a SIP REGISTER request associated with another user client from a network node in the cluster and the network node comprises storage operable to store registration of the another user client.

In one embodiment, the reception logic is operable to receive a SIP INVITE request from an originating user client identifying a destination user client to be contacted, the processing logic is operable to apply the hashing function to at least a portion of the SIP INVITE request to determine a sub-cluster of network nodes comprising a plurality of network nodes from the cluster of network nodes and the transmission logic is operable to forward the SIP INVITE request to at least one of the plurality of network nodes of the sub-cluster of network nodes.

In one embodiment, the at least a portion of the SIP INVITE request comprises a URI of the SIP INVITE request.

In one embodiment, the transmission logic is operable to forward the SIP INVITE request to a first of the plurality of network nodes of the sub-cluster of network nodes.

In one embodiment, the first of the plurality of network nodes of the sub-cluster of network nodes comprises a network node identified by the hashing function to be a highest ranking network node within the sub-cluster.

In one embodiment, the processing logic is operable to determine whether the first of the plurality of network nodes of the sub-cluster of network nodes responds to the SIP INVITE request and, if not, the transmission logic is operable to forward the SIP INVITE request to another of the plurality of network nodes of the sub-cluster of network nodes.

In one embodiment, the second of the plurality of network nodes of the sub-cluster of network nodes comprises a network node identified by the hashing function to be a lower ranking network node within the sub-cluster.

In one embodiment, the transmission logic is operable add a record-route to the SIP INVITE request prior to forwarding.

In one embodiment, the reception logic is operable to receive a SIP INVITE request from another network node in the cluster of network nodes, SIP INVITE request the identifying a destination user client to be contacted, the processing logic is operable to identify the destination user client from stored registration state and the transmission logic is operable to forward the SIP INVITE request to the destination user client identified by the stored registration state.

In one embodiment, the transmission logic is operable to adding a record-route to the SIP INVITE request prior to forwarding.

In one embodiment, the storage is operable to store an entry associated with the SIP INVITE request in a call data record.

In one embodiment, the processing logic is operable to reconcile call data records stored by network nodes to identify variation in entries of the call data records.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figures 1A and 1B illustrate registration of a new user client with a cluster;
Figures 2A and 2B illustrate the operation of the cluster of network nodes in response to a SIP INVITE request; and
Figures 3A and 3B illustrate mid-call redundancy.

### DESCRIPTION OF THE EMBODIMENTS

### Overview

Before discussing the embodiments in any more detail, first an overview will be provided. Embodiments provide a dynamic SIP clustering architecture which autonomously distributes processing across any number of servers so that servers can be added or removed without interrupting ongoing processing or losing data. In particular, an arrangement is provided whereby network nodes are formed into a cluster such that each network node is aware of the presence of all network nodes within that cluster. When a user client first registers with any network node within the cluster, the network node receiving the registration state from the user client identifies at least two network nodes within the cluster (which may include the network node which first received the registration state) with which the registration state should be stored. Hence, rather than storing the registration state with a single network node, the registration state is duplicated across at least two network nodes within the cluster. This provides for a level of redundancy, as a failure or deliberate removal of one of those network nodes does not cause a complete loss of the registration state. Instead, any remaining network nodes with that registration state can be utilized. Nodes are identified to store that registration state based on a consistent hash function, typically based on a characteristic of the request associated with the registration state. Alternatively, a robust hashing function may be used. Thereafter, should a request be received by a network node within the cluster initiating a call to a user client, then the network node receiving that request applies the consistent hashing function to the request in order to determine which nodes hold the registration state for that user client. A weighting may be associated with those nodes in order to distribute requests in proportion to their weighting in order that some nodes receive more requests than others (typically based on the resources available to those nodes). The node receiving the request then performs a lookup for the user client within its stored registration state information and forwards the request to the user client. Should that node fail, then the request can be forwarded to another node storing the registration state for the user client. Also, nodes involved in the call generate call detail records which can be reconciled to ensure their accuracy and identify any network problems, such as a potentially failing node. Should a network node be removed, then the consistent hash function may be utilized in order to redistribute registration state information which was stored by that network node to remaining network nodes within the cluster.

### Cluster Formation

In embodiments, a software image is used to start a number of virtual machines which are configured as network nodes. A first instance of a network node is determined to be a "root" node, selects a logical ID = 0, and is able to start accepting SIP requests. When a second instance of a network node is started, it is provided with the network address of any other node in the cluster (for example, the network address of the root node) and selects a logical ID. As further network nodes are added, they each are made aware of each other and they are each provided with the same consistent hashing function. Each node is also provided with or selects a unique logical identifier.

For example, when a second instance is started (creating a second network node) it is provided with the network address of any other network nodes in the cluster (in this example, the address of the root node) and is allocated a logical ID of 1. The second network node sends a CL-DISCOVER request to any node in the cluster and receives a list of participating nodes (typically including information about the software version each participating node is running).

### Synchronisation

In general, the network nodes are arranged into different virtual racks. For example, the network nodes may be arranged into two virtual racks (for example, two virtual racks, for odd and even nodes respectively, based on the order of joining the cluster or based on physical topology, latency measurements or other criteria) with network nodes having an odd logical identifier being within an odd virtual rack and network nodes having an even logical identifier being in an even virtual rack. It will be appreciated that more than two virtual racks may be provided and network nodes arranged into those virtual racks in a similar manner.

In general, a node synchronizes its registration state when in boots up, by retrieving registration state from every node within the same virtual rack, according to the updated hash function mapping. It receives approximately w/N of all state records, where N is the number of nodes in the virtual rack and 'w' is a weight factor associated with the node. In this way, registration state is distributed amongst all nodes in a given virtual rack.

User client registration state is then replicated across racks so that a failure of all nodes in a given rack does not lead to a loss of all client registration state. After the registration state has been replicated and a node has joined the cluster, forwarding tables are updated such that request for users now located on the network node will be sent to that network node.

In the example mentioned above, the second network node synchronizes the client registration state with the root node and sends a CL-REGISTER request to join the cluster. Thereafter, the user client can send its requests to either of the two network nodes (either the root node or the second network node). Clients may discover the available nodes through a domain name system service record (DNSSRV).

### SIP Register

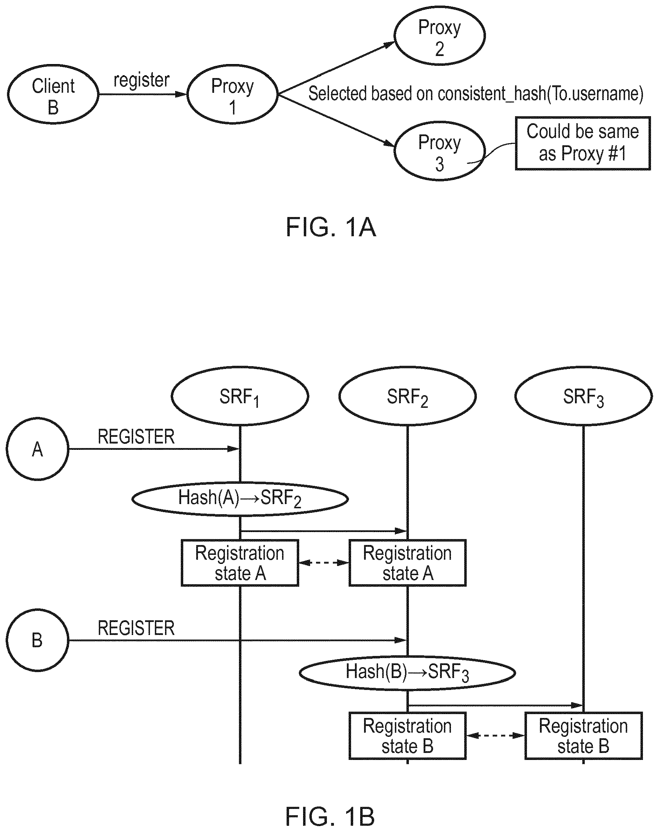

Figure 1A illustrates registration of a new user client with a cluster. As shown in Figure 1A, a new user client (user client B) wishes to register with the cluster and so sends a SIP REGISTER request to one of the network nodes within the cluster. In this example, a first network node (proxy 1) receives the SIP REGISTER request from user client B. Proxy 1 then applies a consistent hashing function to the username part of the TO header to determine a plurality (in this example, two) of network nodes within the cluster to which the SIP REGISTER request should be forwarded to. Proxy 1 then forwards the SIP REGISTER request using standard SIP forwarding mechanisms to the two network nodes identified by the consistent hashing function (in this example, proxy 2 and proxy 3). Each target network node (in this example, proxy 2 and proxy 3) then stores the registration state for user client B.

The use of consistent hashing minimizes the amount of registration state information to be synchronized upon topology changes. A weight can be associated with each network node and taken into account by the consistent hashing function in such a way that the statistical distribution of requests to network nodes is proportional to their weights. For example, if a network node is given a weight of 1 and another network node is given a weight of 2, then the network node with the weight of 2 will receive approximately double the number of requests compared to the network node with the weight of 1.

Figure 1B illustrates a similar arrangement where user clients A and B wish to register with the cluster and so send a SIP REGISTER request to one of the network nodes within the cluster. In this example, a first network node (SRF1) receives the SIP REGISTER request from user client A. SRF1 then applies a consistent hashing function to determine at least another of the network nodes within the cluster to which the SIP REGISTER request should be forwarded to. SRF1 then forwards the SIP REGISTER request to the network node identified by the consistent hashing function (in this example, SRF2). Each target network node (in this example, SRF1 and SRF2) then stores the registration state for user client A. SRF2 receives the SIP REGISTER request from user client B. SRF2 then applies a consistent hashing function to determine at least another of the network nodes within the cluster to which the SIP REGISTER request should be forwarded to. SRF2 then forwards the SIP REGISTER request to the network node identified by the consistent hashing function (in this example, SRF3). Each target network node (in this example, SRF2 and SRF3) then stores the registration state for user client B.

### SIP Invite

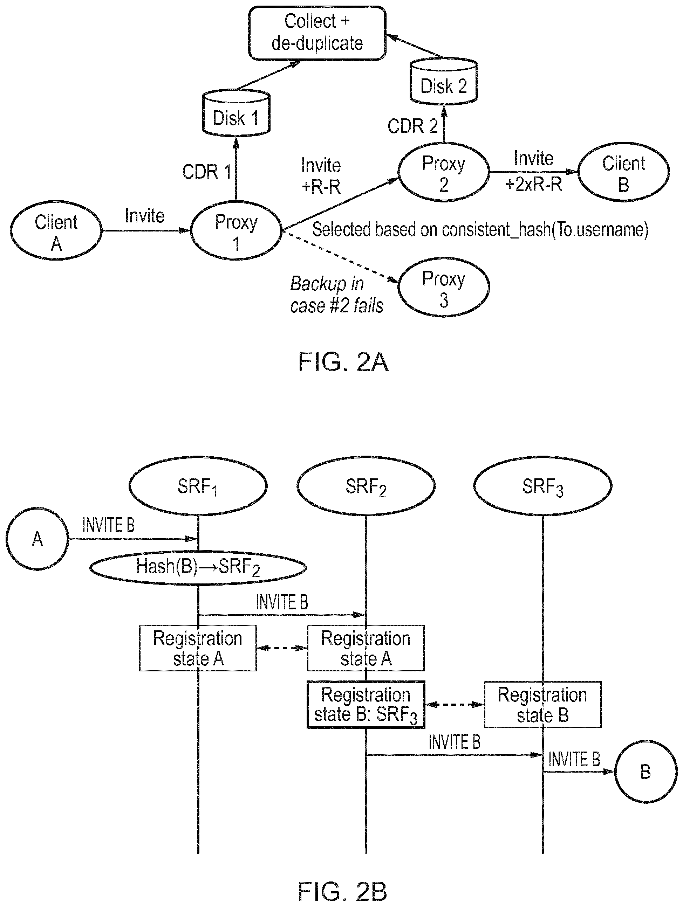

Figure 2A illustrates the operation of the cluster of network nodes in response to a SIP INVITE request. When a network node (in this case proxy 1, but it will be appreciated that any of the nodes within the cluster may receive a SIP INVITE request) receives a SIP INVITE request representing a call from user client A (identified in the SIP INVITE request FROM header) to user client B (identified by the TO header of the SIP INVITE request), proxy 1 applies the same consistent hashing function as was performed during the registration using SIP REGISTER requests to determine which plurality of network nodes hold the registration state for user client B, but in this case the proxy does so based on a normalized request uniform resource identifier (URI of the SIP INVITE request).

In this example, proxy 1 identifies proxy 2 and proxy 3 as holding the registration state for user client B. Proxy 1 then adds a record-route (R-R) header to the SIP INVITE request (in order to receive other future requests in the same dialogue) and forwards the SIP INVITE request to one of either proxy 2 or proxy 3 who hold the registration state for user client B. Typically, the network node (either proxy 2 or proxy 3) is selected based on either the weighting mentioned above, with a preference to select a node in the same virtual rack or one which is physically close to proxy 1. In this example, proxy 2 is selected.

Proxy 2 then receives the SIP INVITE request, performs a lookup for user client B within its stored registration state information, adds a second record-route header (2xR-R) and forwards the SIP INVITE request to user client B using standard SIP routing.

In this way, at least two nodes are always included in the path of any call. The nodes also generate call detail records (CDRs). This means that any single node failing does not cause registration state or call detail records information to be lost.

Should the SIP INVITE request to proxy 2 fails, then proxy 1 can send the SIP INVITE request to proxy 3 for identical processing as outlined for proxy 2 above.

In addition, network nodes within the cluster or other nodes provided by the network provider can examine the duplicate CDRs and analyze these for lack of correlation which may indicate a problem within the network such as an impending failure of one of the network nodes.

Figure 2B illustrates the operation of the network illustrated in Figure 1B in response to a SIP INVITE request where the hash function applied by SRF1 identifies SRF2 as storing the registration state, and the SIP INVITE request is forwarded to SFR2, which in turn forwards the SIP INVITE request via SRF3 onto user client B.

### Cluster Changes

When a network node is to be removed from the cluster in a controlled way (for example, to reduce resource usage) a procedure is followed which is the inverse of the joining procedure. The removing node sends a CL-UNREGISTER message to all other nodes in the cluster, triggering state synchronization with all other nodes in the same virtual rack (that is, all other nodes in the same virtual rack receive the registration state from the network node that is leaving). Request routing tables are then updated to reflect that the network node is no longer available.

All changes to cluster state (for example, adding a node or removing a node) may be subject to an atomic conditional test: a unique hash value is calculated for the ordered list of nodes participating in the system; a change to the cluster is only accepted if the requesting node sends the correct hash value for the current cluster state as part of its request. This procedure ensures consistency of the cluster: only a single node can be added or removed (at all nodes) at any given time. For example, if a second node tries to join a cluster while a first node is in the process of joining (or leaving), this will be detected and the processing related to the second node will be delayed, typically using randomized back-off, before being re-attempted.

### Mid-Call Redundancy

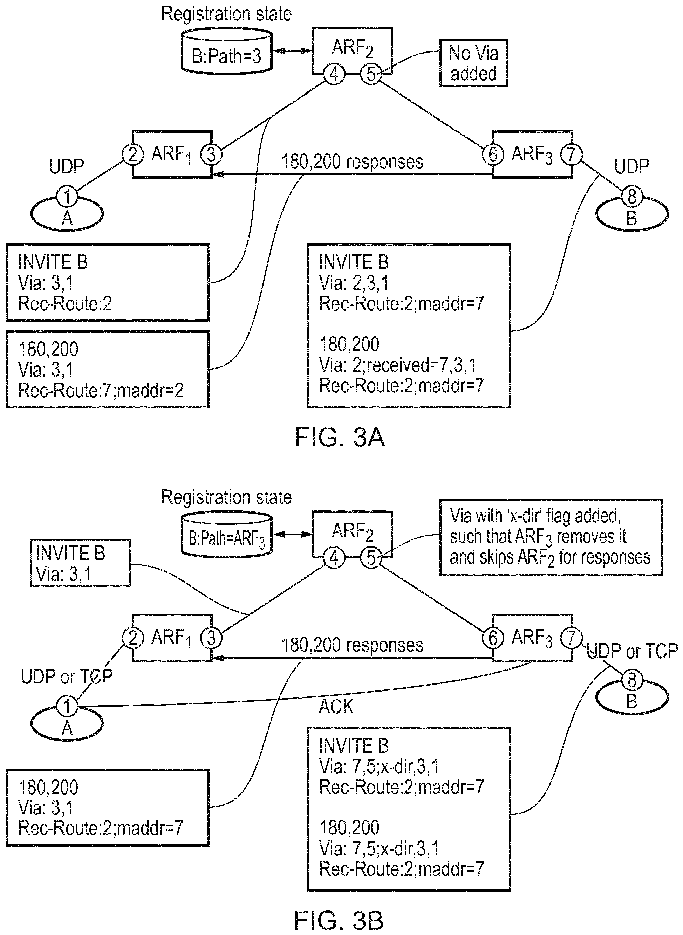

Figure 3A illustrates the operation of a cluster when supporting mid-call redundancy. Three proxy instances SRF1-SRF3 are involved in routing a call attempt (INVITE) from user client A to user client B. Transport ports 1-7 (i.e., IP address + port) are used to send/receive messages.

Each SIP message has 'Via' headers listing the IP:port combinations of nodes or elements that have been traversed, and 'Record-Route' headers which are used for routing mid-call signaling messages (such as BYE'). The 'maddr' parameter is a conventional technique used to override the IP address so, for example, "Rec-Route: 7;maddr=2" will route to 2, with failover to 7 in case 2 is not reachable. The numbering shown in Figure 3A refers to IP:port combinations on which signalling messages are alternatingly sent and received. In Figure 3A, the client sends a message from ip:port 1; it is received by the first proxy on ip:port 2 and forwarded out on ip:port 3, etc. The ip:port combinations on a given element maybe the same (e.g., 1.2.3.4:5060 for both receiving and sending) or maybe different. Ip:port combinations are used in Via and (Record-)Route headers for routing messages (responses and requests respectively).

In an alternative embodiment DNS names (i.e., fully qualified domain name (FQDNs)) are used instead of the 'maddr' technique so that "Rec-Route: 7;maddr=2" would become "2-7.domain.com" and a (custom) DNS server (for example, hosted on each SRF instance) would return 2 IP addresses for this name, i.e., first 2 and then 7. If SRF3 went down, then the cluster would detect this and return only "2" for the DNS query.

Each SIP element normally adds a 'Via' header to requests being forwarded. However, SRF2 in this embodiment does not do this. This is because there is no reason for the responses to be sent via SRF2 (it adds latency and increase the chance of failures), so instead SRF2 does not add a Via and responses normally go directly from SRF3 to SRF1 and then to user client A.

Response failover works in a similar way: Responses are routed using Via headers (i.e., traversing the original path of the request). The receiving elements add a 'received' parameter in case the source IP is different from the one listed in the message. The INVITE towards user client B shows "Via: 2,3,1" which user client B receives from 7, so it adds "received=7" to the top Via header and uses this address for routing its response. If SRF3 goes down, then user client B can route directly to SRF2 instead, and the call may succeed. Just like request failover, response failover can also be implemented using DNS names (e.g., Via: 7-2.domain.com) in which case user client B again adds a 'received' parameter with address 7.

Figure 3B illustrates the operation of a cluster when supporting mid-call redundancy. This arrangement is similar to Figure 3A and provides a trade-off between resources, latency and redundancy (this arrangement has no redundant CDRs but uses less resources and has lower latency; this arrangement also has less chance to fail (1 VM instead of 2). If the VM fails, then clients can fail over to ARF1 (with which A already has a connection).

As mentioned above, robust hashing is an alternative to consistent hashing; it calculates a weight factor by hashing an incoming request with each of the available nodes IDs (i.e., performing N hashes) and selects the node(s) to forward to based on sorting of the resulting list (e.g. based on priority to highest or lowest weight). This methodology has the advantage of being independent of the order in which nodes were added to the cluster, at the expense of higher processing cost per request (compared with an embodiment which would use an array with node IDs distributed according to weights, performing only a single hash operation per request).

Accordingly, it can be seen that the provided embodiments enable a platform for processing SIP messages to be built which is elastic, whereby it is dynamically scalable by adding or removing servers as needed. The architecture is also uniform whereby all elements perform the same function, while allowing for differences in processing power. Uniformity helps reduce the number of failure scenarios which need to be tested or considered and allows heterogeneous servers (for example, different hardware generations, different size virtual machines, different number of CPUs, memory or other resources) to be utilized.

The processing capacity of the cluster can be tuned based on demand, within an interval of seconds rather than days. A software upgrade can be performed by simply adding new nodes running new software, and then taking down the nodes running the older software (possibly automatically deferring the switching on of new features in the new nodes until all nodes have been upgraded). This approach is fully software-based, avoiding the need to invest in redundant hardware or spare capacity. This approach offers extremely high performance, partly due to the architecture. Further, in one embodiment, it is possible to hold cached partial credentials for registered users in memory (for example, using 16 bytes per user) to allow a processing flow which only uses a single in-memory lookup for re-registrations.

Accordingly, it can be seen that one or more embodiments herein provide a dynamic SIP clustering architecture which autonomously distributes processing across any number of servers, in such a way that servers can be added or removed without interrupting ongoing processing or loosing data.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labeled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a network node (SRF₁; SRF₂) of a cluster of network nodes (SRF₁₋₃), said method comprising:
receiving a SIP REGISTER request from a user client (A; B), said SIP REGISTER request containing a registration state associated with said user client;
applying a hashing function to at least a portion of said SIP REGISTER request from said user client to determine a sub-cluster (SRF₁₋₂; SRF₂₋₃) of said cluster of network nodes, said sub-cluster comprising a plurality of network nodes from said cluster of network nodes; and
forwarding said SIP REGISTER request to said sub-cluster of network nodes for storage of said registration state for said user client by each network node within said sub-cluster of network nodes.

2. The method of claim 1, wherein said hashing function is identical for each network node within said cluster.

3. The method of claim 1 or 2, wherein said hashing function identifies a ranked plurality of network nodes from said cluster of network nodes as said sub-cluster of network nodes.

4. The method of any preceding claim, wherein said at least a portion of said SIP REGISTER request comprises a TO HEADER.

5. The method of any preceding claim, comprising:
receiving another SIP REGISTER request associated with another user client from a network node in said cluster; and
storing a registration state of said another user client.

6. The method of any preceding claim, comprising:
receiving a SIP INVITE request from an originating user client (A) identifying a destination user client (B) to be contacted;
applying said hashing function to at least a portion of said SIP INVITE request to determine another sub-cluster (SRF₂₋₃) of said cluster of network nodes, said another cluster comprising another plurality of network nodes from said cluster of network nodes; and
forwarding said SIP INVITE request to at least one of said another plurality of network nodes of said another sub-cluster of network nodes.

7. The method of claim 6, wherein said at least a portion of said SIP INVITE request comprises a uniform resource identifier.

8. The method of claim 6 or 7, wherein said forwarding said SIP INVITE request comprises:
forwarding said SIP INVITE request to at least two of said another plurality of network nodes of said another sub-cluster of network nodes.

9. The method of claim 6 or 7, wherein said forwarding said SIP INVITE request comprises forwarding said SIP INVITE request to a first of said another plurality of network nodes of said sub-cluster of network nodes, said first of said another plurality of network nodes of said sub-cluster of network nodes is a network node identified by said hashing function to be a highest ranking network node within said another sub-cluster.

10. The method of claim 8 or 9, further comprising:
determining whether said first of said another plurality of network nodes of said another sub-cluster of network nodes responds to said SIP INVITE request and, if not, forwarding said SIP INVITE request to a second of said another plurality of network nodes of said another sub-cluster of network nodes.

11. The method of claim 10, wherein said second of said another plurality of network nodes of said another sub-cluster of network nodes comprises a network node identified by said hashing function to be a lower ranking network node than said first of said another plurality of network nodes within said sub-cluster.

12. The method of any preceding claim, comprising:
receiving a second SIP INVITE request from another network node in said cluster of network nodes, said second SIP INVITE request said identifying a destination user client to be contacted;
identifying said destination user client from stored registration state; and
forwarding said second SIP INVITE request to said destination user client identified by said stored registration state.

13. The method of any preceding claim, comprising:
reconciling call data records stored by network nodes to identify variation in entries of said call data records.

14. A network node (SRF₁; SRF₂) for a cluster of network nodes, said network node comprising:
reception logic operable to receive a SIP REGISTER request from a user client (A; B), said SIP REGISTER request containing a registration state associated with said user client;
processing logic operable to apply a hashing function to at least a portion of said SIP REGISTER request from said user client to determine a sub-cluster (SRF₁₋₂; SRF₂₋₃) of said cluster of network nodes, said sub-cluster comprising a plurality of network nodes of said cluster of network nodes; and
transmission logic operable to forward said SIP REGISTER request to said sub-cluster of network nodes for storage of said registration state for said user client by each network node within said sub-cluster of network nodes.

15. A computer program product operable, when executed on a computer, to perform the method steps of any one of claims 1 to 13.

## Patentansprüche

1. Verfahren für einen Netzwerkknoten (SRF₁; SRF₂) eines Clusters von Netzwerkknoten (SRF₁₋₃), wobei das Verfahren umfasst:
Empfangen einer SIP REGISTER-Anfrage von einem Benutzer-Client (A; B), wobei diese SIP REGISTER-Anfrage einen diesem Benutzer-Client zugeordneten Registrierungs-Status enthält;
Anwenden einer Hash-Funktion auf mindestens einen Teil der SIP REGISTER-Anfrage von diesem Benutzer-Client um einen Sub-Cluster (SRF₁₋₂; SRF₂₋₃) dieses Clusters von Netzwerkknoten zu bestimmen, wobei der Sub-Cluster eine Vielzahl von Netzwerkknoten aus dem Cluster von Netzwerkknoten umfasst; und
Weiterleiten dieser SIP REGISTER-Anfrage an den Sub-Cluster von Netzwerkknoten zur Speicherung des Registrierungs-Status dieses Benutzer-Clients durch jeden Netzwerkknoten innerhalb des Sub-Clusters von Netzwerkknoten.

2. Verfahren nach Anspruch 1, wobei diese Hash-Funktion für jeden Netzwerkknoten innerhalb des Clusters identisch ist.

3. Verfahren nach Anspruch 1 oder 2, wobei diese Hash-Funktion eine rangierte Vielzahl von Netzwerkknoten aus diesem Cluster von Netzwerkknoten als diesen Sub-Cluster von Netzwerkknoten identifiziert.

4. Verfahren nach einem der vorhergehenden Ansprüche, wobei mindestens ein Teil dieser SIP-REGISTER-Anfrage einen TO HEADER umfasst.

5. Verfahren nach einem der vorhergehenden Ansprüche, umfassend:
Empfangen einer anderen SIP REGISTER-Anfrage, die einem anderen Benutzer-Client zugeordnet ist, von einem Netzwerkknoten in dem Cluster; und
Speichern eines Registrierungs-Status des anderen Benutzer-Clients.

6. Verfahren nach einem der vorhergehenden Ansprüche, umfassend:
Empfangen einer SIP INVITE-Anfrage von einem Ursprungsbenutzer-Client (A), welche einen zu kontaktierenden Zielbenutzer-Client identifiziert;
Anwenden dieser Hash-Funktion auf mindestens einen Teil der SIP INVITE-Anfrage, um einen anderen Sub-Cluster (SRF₂₋₃) des Clusters von Netzwerkknoten zu bestimmen, wobei der andere Cluster eine andere Vielzahl von Netzwerkknoten aus dem Cluster von Netzwerkknoten umfasst; und
Weiterleiten der SIP INVITE-Anfrage an mindestens eine dieser anderen Vielzahl von Netzwerkknoten des anderen Sub-Clusters von Netzwerkknoten.

7. Verfahren nach Anspruch 6, wobei dieser mindestens eine Teil der SIP INVITE-Anfrage einen einheitlichen Ressourcen-Identifier umfasst.

8. Verfahren nach Anspruch 6 oder 7, wobei das Weiterleiten der SIP INVITE-Anfrage umfasst:
Weiterleiten der SIP INVITE-Anfrage an mindestens zwei dieser anderen Vielzahl von Netzwerkknoten des anderen Subclusters von Netzwerkknoten.

9. Verfahren nach Anspruch 6 oder 7, wobei dieses Weiterleiten dieser SIP INVITE-Anfrage das Weiterleiten dieser SIP INVITE-Anfrage an eine erste dieser anderen Vielzahl von Netzwerkknoten des Sub-Clusters von Netzwerkknoten umfasst, wobei diese erste dieser anderen Vielzahl von Netzwerkknoten von diesem Sub-Cluster von Netzwerkknoten ein Netzwerkknoten ist, der durch die Hash-Funktion als ein Netzwerkknoten mit dem höchsten Rang innerhalb des anderen Sub-Clusters identifiziert ist.

10. Verfahren nach Anspruch 8 oder 9, ferner umfassend:
Bestimmen, ob die erste der anderen Vielzahl von Netzwerkknoten des anderen Sub-Clusters von Netzwerkknoten auf die SIP INVITE-Anfrage antwortet, und falls nicht, Weiterleiten dieser SIP INVITE-Anfrage an eine zweite der anderen Vielzahl von Netzwerkknoten des anderen Sub-Clusters von Netzwerkknoten.

11. Verfahren nach Anspruch 10, wobei die zweite der anderen Vielzahl von Netzwerkknoten dieses anderen Sub-Clusters von Netzwerkknoten, einen Netzwerkknoten umfasst, der durch die Hash-Funktion als ein Netzwerkknoten identifiziert ist, der tiefer rangiert ist als diese erste der anderen Vielzahl von Netzwerkknoten innerhalb des Sub-Clusters.

12. Verfahren nach einem der vorhergehenden Ansprüche, umfassend:
Empfangen einer zweiten SIP INVITE-Anfrage von einem anderen Netzwerkknoten aus diesem Cluster von Netzwerkknoten, wobei die zweite SIP INVITE-Anfrage den zu kontaktierenden Zielbenutzer-Client identifiziert;
Identifizieren des Zielbenutzer-Clients aus dem gespeicherten Registrierungs-Status; und
Weiterleiten der zweiten SIP INVITE-Anfrage an diesen Zielbenutzer-Client, der mittels des gespeicherten Registrierungs-Status identifiziert ist.

13. Verfahren nach einem der vorhergehenden Ansprüche, umfassend:
Abgleichen von, mittels Netzwerkknoten gespeicherten, Anrufdatensätzen, um Abweichungen in Eingängen bei diesen Anrufdatensätze zu identifizieren.

14. Netzwerkknoten (SRF₁ ; SRF₂) für einen Cluster von Netzwerkknoten, wobei der Netzwerkknoten umfasst:
eine Empfangslogik, die fähig ist, eine SIP REGISTER-Anfrage von einem Benutzer-Client (A; B) zu empfangen, wobei die SIP REGISTER-Anfrage einen dem Benutzer-Client zugeordneten Registrierungs-Status enthält;
eine Verarbeitungslogik, die fähig ist, eine Hashfunktion auf mindestens einen Teil der SIP REGISTER-Anfrage von diesem Benutzer-Client anzuwenden, um einen Sub-Cluster (SRF₁₋₂; SRF₂₋₃) dieses Clusters von Netzwerkknoten zu bestimmen, wobei dieser Sub-Cluster eine Vielzahl von Netzwerkknoten dieses Clusters von Netzwerkknoten umfasst; und
eine Übertragungslogik, die fähig ist, diese SIP REGISTER-Anfrage weiterzuleiten, an diesen Sub-Cluster von Netzwerkknoten, für die Speicherung des Registrierungs-Status dieses Benutzer-Clients durch jeden Netzwerkknoten innerhalb des Sub-Clusters von Netzwerkknoten.

15. Computerprogramm-Produkt, das, wenn auf einem Computer ausgeführt, fähig ist, die Verfahrensschritte nach einem der Ansprüche 1 bis 13 durchzuführen.

## Revendications

1. Procédé pour un noeud réseau {SRF₁ ; SRF₂) d'un ensemble de noeuds réseau (SRF₁₋₃), ledit procédé comprenant :
la réception d'une requête de REGISTRE SIP en provenance d'un client utilisateur (A; B), ladite requête de REGISTRE SIP contenant un état d'enregistrement associé audit client utilisateur ;
l'application d'une fonction de hachage à au moins une partie de ladite requête de REGISTRE SIP en provenance dudit client utilisateur afin de calculer un sous-ensemble (SRF₁₋₂; SRF₂₋₃) dudit ensemble de noeuds réseau, ledit sous-ensemble comprenant une pluralité de noeuds réseau dudit ensemble de noeuds réseau ; et
la retransmission de ladite requête de REGISTRE SIP audit sous-ensemble de noeuds réseau pour le stockage dudit état d'enregistrement pour ledit client utilisateur par chaque noeud au sein du sous-ensemble de noeuds réseau.

2. Procédé selon la revendication 1, selon lequel ladite fonction de hachage est identique pour chaque noeud réseau au sein dudit sous-ensemble.

3. Procédé selon la revendication 1 ou la revendication 2, selon lequel ladite fonction de hachage identifie une pluralité de noeuds réseau ordonnés par rang parmi ledit ensemble de noeuds réseau en tant que ledit sous-ensemble de noeuds réseau.

4. Procédé selon l'une quelconque des revendications précédentes, selon lequel ladite au moins une partie de ladite requête de REGISTRE SIP comprend une en-tête de DESTINATAIRE.

5. Procédé selon l'une quelconque des revendications précédentes, comprenant :
la réception d'une autre requête de REGISTRE SIP associé à un autre client utilisateur en provenance d'un noeud de réseau dans ledit ensemble ; et
le stockage d'un état d'enregistrement d'un autre client utilisateur.

6. Procédé selon l'une quelconque des revendications précédentes, comprenant :
la réception d'une requête d'INVITATION SIP en provenance d'un client utilisateur générateur (A) identifiant un utilisateur client destinataire (B) devant être contacté ;
l'application de ladite fonction de hachage à au moins une partie de ladite requête d'INVITATION SIP afin de calculer un autre sous-ensemble (SRF₂₋₃) dudit ensemble de noeuds réseau, ledit autre sous-ensemble comprenant une autre pluralité de noeuds réseau parmi ledit ensemble de noeuds réseau ; et
la retransmission de ladite requête d'INVITATION SIP à au moins un autre noeud réseau de ladite pluralité de noeuds réseau dudit autre sous-ensemble de noeuds réseau.

7. Procédé selon la revendication 6, selon lequel ladite au moins une partie de ladite requête d'INVITATION SIP comprend un identifiant de ressource uniforme.

8. Procédé selon la revendication 6 ou 7, selon lequel ladite retransmission de ladite requête d'INVITATION SIP comprend :
la retransmission de ladite requête d'INVITATION SIP à au moins deux noeuds de ladite pluralité de noeuds réseau dudit autre sous-ensemble de noeuds réseau.

9. Procédé selon la revendication 6 ou 7, selon lequel la retransmission de ladite requête d'INVITATION SIP comprend la retransmission de ladite requête d'INVITATION SIP à un premier noeud de ladite autre pluralité de noeuds réseau dudit sous-ensemble de noeuds réseau, ledit premier noeud de ladite autre pluralité de noeuds réseau dudit sous-ensemble de noeuds réseau étant un noeud réseau identifié par ladite fonction de hachage comme étant un noeud réseau de rang le plus important au sein dudit autre sous-ensemble.

10. Procédé selon la revendication 8 ou 9, comprenant en outre :
le calcul de ce que ledit premier noeud de ladite autre pluralité de noeuds réseau dudit autre sous-ensemble de noeuds réseau répond ou non à ladite requête d'INVITATION SIP, et si non, la retransmission de ladite requête d'INVITATION SIP à un deuxième noeud de ladite autre pluralité de noeuds réseau dudit autre sous-ensemble de noeuds réseau.

11. Procédé selon la revendication 10, selon lequel ledit deuxième noeud de ladite autre pluralité de noeuds réseau dudit autre sous-ensemble de noeuds réseau comprend un noeud réseau identifié par ladite fonction de hachage comme étant un noeud réseau de rang moins important que ledit premier noeud de ladite autre pluralité de noeuds réseau au sein dudit sous-ensemble.

12. Procédé selon l'une quelconque des revendications précédentes, comprenant :
la réception d'une deuxième requête d'INVITATION SIP en provenance d'un autre noeud réseau au sein dudit ensemble de noeuds réseau, ladite deuxième requête d'INVITATION SIP identifiant un client utilisateur destinataire devant être contacté ;
l'identification dudit client utilisateur destinataire à partir de l'état d'enregistrement stocké; et la retransmission de ladite deuxième requête d'INVITATION SIP audit client utilisateur de destination identifié par ledit état d'enregistrement stocké.

13. Procédé selon l'une quelconque des revendications précédentes, comprenant :
la réconciliation des enregistrements de données d'appel, stockées par les noeuds réseau afin d'identifier la variation dans les entrées des dits enregistrements de données d'appel.

14. Noeud de réseau (SRF₁ ; SRF₂) pour un ensemble de noeuds réseau, ledit noeud de réseau comprenant :
de la logique de réception opérable pour la réception d'une requête de REGISTRE SIP en provenance d'un client utilisateur (A; B), ladite requête de REGISTRE SIP contenant un état d'enregistrement associé audit client utilisateur ;
de la logique de traitement opérable pour l'application d'une fonction de hachage à au moins une partie de ladite requête de REGISTRE SIP en provenance dudit client utilisateur afin de calculer un sous-ensemble (SRF₁₋₂; SRF₂₋₃) dudit ensemble de noeuds réseau, ledit sous-ensemble comprenant une pluralité de noeuds réseau dudit ensemble de noeuds réseau ; et
de la logique de transmission opérable pour la retransmission de ladite requête de REGISTRE SIP audit sous-ensemble de noeuds réseau pour le stockage dudit état d'enregistrement pour ledit client utilisateur par chaque noeud au sein du sous-ensemble de noeuds réseau.

15. Produit de programme d'ordinateur opérable, lors de son exécution par un ordinateur, pour effectuer les étapes de procédé selon l'une quelconque des revendications 1 à 13.
